# EUROPÄISCHE PATENTSCHRIFT

(11) **EP 3 742 055 B1**
(45) Veröffentlichungstag und Bekanntmachung des Hinweises auf die Patenterteilung: **22.04.2026**
(21) Anmeldenummer: 20172349.1
(22) Anmeldetag: 30.04.2020
(51) Int. Cl.: F24C 15/20, G02B 27/00

(54) **HAUSHALTSGERÄT UND DESSEN OBJEKTIVBAUGRUPPE**
HOUSEHOLD APPLIANCE AND ITS LENS ASSEMBLY
APPAREIL ÉLECTROMÉNAGER ET SON MODULE DE LENTILLE

(30) Priorität: 20.05.2019 CN 201920721864 U
(43) Veröffentlichungstag der Anmeldung: 25.11.2020
(73) Patentinhaber: BSH Hausgeräte GmbH, 81739 München (DE)
(72) Erfinder: Ding, Tiantian, Jiangsu provinces, Jiangsu 210046 (CN); Yang, Lei, Nanjing, Jiangsu 210000 (CN)

(56) Entgegenhaltungen:
- WO-A1-2018/163001
- CN-A- 102 081 232
- CN-B- 107 238 121
- JP-A- 2012 168 457
- US-A1- 2015 257 591
- US-A1- 2017 134 652

## Beschreibung

### Gebiet der Anmeldung

Die vorliegende Anmeldung bezieht sich auf eine Objektivbaugruppe eines Haushaltsgeräts, sowie auf ein Haushaltsgerät das mit einer Objectivbaugruppe versehen ist.

### Technischer Hintergrund

Für Kameras sind aus der JP 2012168457 A und der CN 102081232 A Vorrichtungen zum Verhindern der Anhaftung von Fremdkörpern und Reinigen der Kameralinse bekannt. Die Vorrichtungen können an der Kamera befestigt werden.

Aufgrund des wissenschaftlichen und technischen Fortschritts besteht im Haushaltsgerätebereich die Tendenz zur Intellektualisierung. Dabei sind viele Haushaltsgeräte mit einem Objektiv zur Bildaufnahme oder zur Projizierung versehen. So ist z.B. an einer Dunstabzugshaube eine Kamera angebracht, mit der Bilder eines unterhalb der Dunstabzugshaube stattfindenden Kochvorgangs aufgenommen oder Bewegungen des Benutzers erfasst werden, um einen entsprechenden Steuerbefehl zu erzeugen. Allerdings unterscheidet sich eine Küche dadurch von anderen Umgebungen, dass beim Kochen Dunst entsteht, so dass in der Luft unvermeidlich Fett enthalten ist, insbesondere im Bereich der Dunstabzugshaube. Dabei ist das Objektiv der an der Dunstabzugshaube angebrachten Kamera oft mit dem Fett belastet, was sich negativ auf den Aufnahmeeffekt auswirkt. Zudem gibt das an einem Haushaltsgerät angeordnete Objektiv beim Betrieb viel Wärme ab, die effektiv abgeführt werden muss, was auch ein dringend zu lösendes Problem darstellt.

In der WO 2018/163001 A1 ist eine Dunstabzugshaube mit einem Bildverarbeitungsapparat beschrieben, der eine Kamera, einen Luftstromerzeugungsapparat und einen Luftkanal umfasst.

In der US 2015/257591 A1 wird ein Gerät mit einem Sensor beschrieben, der auf eine unter dem Sensor positionierte Kochfläche gerichtet ist. Es sind eine oder mehrere Funktionen vorgesehen, um einen Luftstrom über das Sensorende des Sensors zu leiten, um ihn während des Kochvorgangs zu schützen oder abzuschirmen

Die US 2017/134652 A1 offenbart ein System und ein Verfahren zur Abbildung eines Objekts, während das Objekt in einer HF-Umgebung erhitzt wird. Bevorzugte Ausführungsformen der vorliegenden Erfindung arbeiten mit einem HF-Gerät, das eine Energiequelle und ein Gehäuse mit einer Öffnung umfasst. Am Gehäuse ist eine Sichtöffnung angebracht, die es einem bildgebenden Gerät ermöglicht, das Objekt abzubilden, während es erhitzt wird. Die Sichtöffnung umfasst außerdem einen HF-Unterdrücker und ein Luftspülsystem zur Kühlung verschiedener Komponenten und/oder zur Reduzierung von Kondensation zumindest auf dem Linsenteil des Bildgebungsgeräts.

Mit der obenstehenden Beschreibung des Stands der Technik wird nicht eingestanden, dass dieser Stand der Technik bereits vor dem Anmeldetag der vorliegenden Anmeldung für die durchschnittlichen Fachleuten auf diesem Gebiet allgemein bekannt ist, es sei denn, dass ausreichende Nachweise dafür vorliegen.

### Offenbarung der Erfindung

Ausgehend von zumindest einem der oben erwähnten Probleme ist es eine Aufgabe der Ausführungsbeispiele der vorliegenden Anmeldung, ein verbessertes Haushaltsgerät und eine zugehörige Objektivbaugruppe vorzuschlagen.

Die Erfindung betrifft eine Objektivbaugruppe eines Haushaltsgeräts mit dem Merkmalen des Anspruchs 1. Ein Ausführungsbeispiel der vorliegenden Anmeldung betrifft eine Objektivbaugruppe eines Haushaltsgeräts, die ein Objektiv, eine Luftstromerzeugungsvorrichtung, einen Luftkanal und eine Schutzhaube umfasst. Die Schutzhaube umfasst eine Innenwand und eine Außenwand, wobei zwischen der Innenwand und der Außenwand ein Luftstromkanal ausgebildet ist. An der Innenwand ist ein in den Luftstromkanal mündendes Luftaustrittsloch vorgesehen. Die Innenwand ist ringförmig ausgebildet und umschließt zumindest teilweise das Objektiv. Dabei tritt ein durch die Luftstromerzeugungsvorrichtung erzeugter Luftstrom nach Herausströmen aus dem Auslass des Luftkanals in den Luftstromkanal ein und strömt anschließend durch das Luftaustrittsloch der Innenwand aus. Auf diese Weise kann zum einen die Anhaftung von Fett an dem Objektiv reduziert und zum anderen die Wärmeabführung unterstützt werden.

In einem möglichen Ausführungsbeispiel ist das Luftaustrittsloch der Innenwand so angeordnet, dass der aus dem Luftaustrittsloch der Innenwand herausströmende Luftstrom einen Luftvorhang vor dem Objektiv erzeugt. Dies trägt zur Reduzierung der Anhaftung von Fett an dem Objektiv bei.

In einem möglichen Ausführungsbeispiel hat die Innenwand die Form eines Hornmunds. Dadurch wird es ermöglicht, dass der aus dem Luftaustrittsloch der Innenwand herausströmende Luftstrom einen Luftvorhang vor dem Objektiv erzeugt.

In einem möglichen Ausführungsbeispiel hat die Innenwand die Form eines Kegelstumpfmantels. Dadurch wird es ermöglicht, dass der aus dem Luftaustrittsloch der Innenwand herausströmende Luftstrom einen Luftvorhang vor dem Objektiv erzeugt.

In einem möglichen Ausführungsbeispiel sind mehrere Luftaustrittslöcher vorgesehen, die in Umfangsrichtung der Innenwand hintereinander angeordnet sind. Dadurch wird es ermöglicht, dass der aus dem Luftaustrittsloch der Innenwand herausströmende Luftstrom einen Luftvorhang vor dem Objektiv erzeugt.

In einem möglichen Ausführungsbeispiel umfasst die Objektivbaugruppe ferner ein Filtersieb, das in dem Luftkanal angeordnet ist. Durch das Vorsehen des Filtersiebs kann die Sauberkeit des aus dem Luftaustrittsloch der Innenwand herausströmenden Luftstroms erhöht werden, was zur Reduzierung der Anhaftung von Fett an dem Objektiv beiträgt.

In einem möglichen Ausführungsbeispiel umfasst die Luftstromerzeugungsvorrichtung ein Gebläse, das sich in dem Luftkanal befindet und zwischen dem Filtersieb und dem Auslass des Luftkanals angeordnet ist.

In einem möglichen Ausführungsbeispiel handelt es sich bei dem Objektiv um ein Bildaufnahmeobjektiv und/oder um ein Projektionsobjektiv.

Erfindungsgemäß umfasst die Schutzhaube ferner einen Befestigungsabschnitt, der zum Befestigen des Objektivs eingerichtet ist, wobei die Innenwand der Schutzhaube an einem Ende mit der Außenwand der Schutzhaube und am anderen Ende mit dem Befestigungsabschnitt verbunden ist, während die Außenwand der Schutzhaube an einem Ende mit der Innenwand der Schutzhaube verbunden ist und mit dem anderen Ende eine Lufteintrittsöffnung bildet, an die sich der Auslass des Luftkanals anschließt. Dadurch wird erreicht, dass ein durch die Luftstromerzeugungsvorrichtung erzeugter Luftstrom nach Herausströmen aus dem Auslass des Luftkanals zunächst in die Lufteintrittsöffnung und dann in den Luftstromkanal eintritt, um anschließend durch das Luftaustrittsloch der Innenwand auszuströmen.

Ein weiteres Ausführungsbeispiel der vorliegenden Anmeldung betrifft ein Haushaltsgerät mit einer Objektivbaugruppe gemäß einem der vorangehenden Ausführungsbeispiele.

In einem möglichen Ausführungsbeispiel handelt es sich bei dem Haushaltsgerät um eine Dunstabzugshaube, die mit einer Dunstauffanghaube versehen ist, wobei die Schutzhaube und das Objektiv an einer Bodenwand der Dunstauffanghaube angeordnet sind, während sich der Einlass des Luftkanals an einer Oberwand der Dunstauffanghaube befindet.

Die obenstehenden Ausgestaltungen der vorliegenden Anmeldung dienen nicht zur Beschreibung aller möglicher Ausführungsformen der vorliegenden Anmeldung. In der ganzen Anmeldung werden mehrere Beispiele zur Anleitung aufgezählt, welche bei verschiedenen möglichen Kombinationen verwendet werden können.

### Darstellung der Abbildungen

Die nachstehenden Zeichnungen stellen keine Einschränkung des Rahmens der vorliegenden Anmeldung dar, sondern dienen lediglich zur schematischen Darlegung und Erläuterung der vorliegenden Anmeldung. Dabei zeigen:
FIG 1 in schematischer Darstellung die Funktionsweise einer Objektivbaugruppe eines Ausführungsbeispiels einer Dunstabzugshaube gemäß der vorliegenden Anmeldung,
FIG 2 in schematischer Darstellung die Struktur einer Schutzhaube einer Objektivbaugruppe eines Ausführungsbeispiels einer Dunstabzugshaube gemäß der vorliegenden Anmeldung,
FIG 3 eine Schnittansicht der Schutzhaube gemäß FIG 2 und
FIG 4 in schematischer Darstellung die Struktur eines Ausführungsbeispiels einer Dunstabzugshaube gemäß der vorliegenden Anmeldung.

### Bezugszeichenliste

1 Filtersieb
2 Gebläse
3 Auslass eines Luftkanals
4 Schutzhaube
5 Objektiv
6 Innenwand der Schutzhaube
7 Außenwand der Schutzhaube
8 Luftaustrittsloch
9 Gehäuse
10 Dunstauffanghaube
11 Oberwand der Dunstauffanghaube
12 Bodenwand der Dunstauffanghaube
13 Luftstromkanal
14 Aufnahmenut
15 Lufteintrittsöffnung

### Konkrete Ausführungsformen

Zum besseren Verständnis der Aufgabe, der Ausgestaltungen und der vorteilhaften Wirkungen der vorliegenden Anmeldung wird diese im Folgenden anhand bevorzugter Ausführungsbeispiele unter Bezugnahme auf die beigefügten Zeichnungen näher beschrieben.

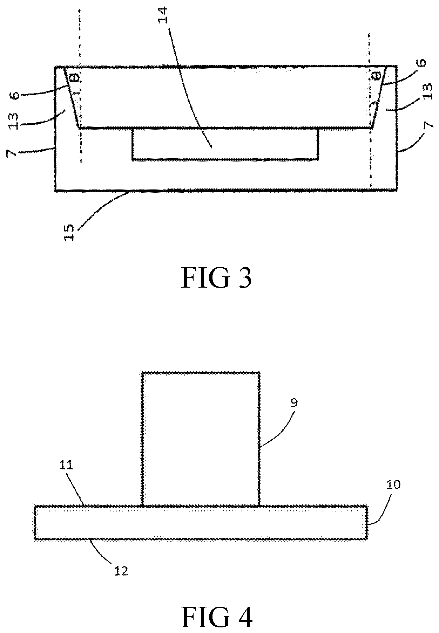

Die vorliegende Anmeldung schlägt ein Ausführungsbeispiel einer Dunstabzugshaube vor, das, wie in FIG 4 erkennbar, ein Gehäuse 9, eine Dunstauffanghaube 10 und eine Objektivbaugruppe umfasst. Hierbei ist die Objektivbaugruppe fest an der Dunstauffanghaube 10 angeordnet. Konkret ist die Objektivbaugruppe in der Dunstauffanghaube 10 eingebettet. Bei dieser Dunstabzugshaube handelt es sich um eine nach oben absaugende Dunstabzugshaube, bei der die Dunstauffanghaube 10 unterhalb des Gehäuses 9 hängend angeordnet ist, so dass die Dunstabzugshaube insgesamt eine umgedrehte T-Form gemäß FIG 4 hat.

Die Objektivbaugruppe umfasst eine Kamera, ein Filtersieb 1, eine Luftstromerzeugungsvorrichtung, einen Luftkanal und eine Schutzhaube 4. Die Kamera umfasst ein Objektiv 5. Das Filtersieb 1 ist in dem Luftkanal angeordnet. Konkret befindet sich das Filtersieb 1 am Einlass des Luftkanals. Die Luftstromerzeugungsvorrichtung umfasst ein Gebläse 2, das als Zentrifugalgebläse ausgebildet und in dem Luftkanal angeordnet ist. Das Gebläse 2 befindet sich zwischen dem Filtersieb 1 und dem Auslass 3 des Luftkanals.

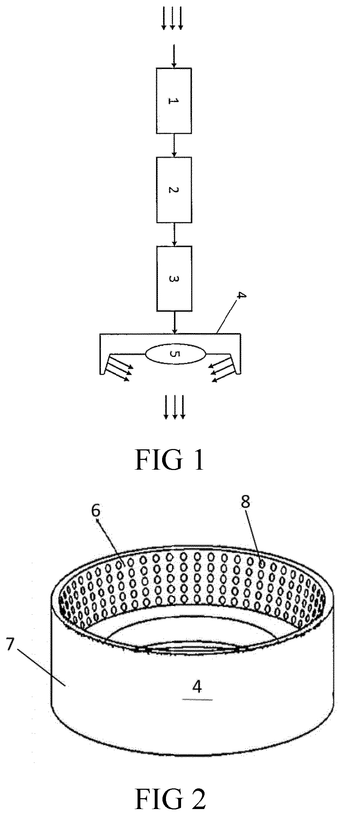

Die Schutzhaube 4 umfasst eine Innenwand 6, eine Außenwand 7 und einen Befestigungsabschnitt, wobei zwischen der Innenwand 6 und der Außenwand 7 ein Luftstromkanal 13 ausgebildet ist. Wie in FIG 2 dargestellt ist, sind an der Innenwand 6 mehrere in den Luftstromkanal 13 mündende Luftaustrittslöcher 8 vorgesehen. Die Innenwand 6 ist ringförmig ausgebildet, hat die Form eines Hornmunds und umschließt das Objektiv 5. Konkret ist die Innenwand 6 kegelstumpfmantelförmig ausgebildet, d.h. die Innenwand 6 weist die Form eines Kegelstumpfmantels auf. Es sei angemerkt, dass FIG 3 eine Schnittansicht der Schutzhaube 4 zeigt, in der die Schutzhaube 4 durch eine entsprechende Schnittebene in zwei symmetrische Teile aufgeschnitten ist. In FIG 3 sind die Luftaustrittslöcher 8 nicht dargestellt. Aus FIG 3 wird ersichtlich, dass die Innenwand 6 der Schutzhaube 4 an einem Ende mit der Außenwand 7 der Schutzhaube 4 und am anderen Ende mit dem Befestigungsabschnitt verbunden ist. Der Befestigungsabschnitt ist zum Befestigen des Objektivs 5 eingerichtet. Im Einzelnen ist der Befestigungsabschnitt mit einer Aufnahmenut 14 versehen, wobei eine Oberfläche der Aufnahmenut 14 zum Befestigen des Objektivs 5 dient (im vorliegenden Ausführungsbeispiel ist die ganze Kamera samt dem Objektiv 5 an dieser Oberfläche der Aufnahmenut 14 befestigt), während die andere, gegenüberliegende Oberfläche der Aufnahmenut 14 zum Einleiten eines Luftstroms in den Luftstromkanal 13 eingesetzt wird, siehe hierzu FIG 3.

Die Außenwand 7 der Schutzhaube 4 ist zylinderförmig ausgebildet, wobei die Außenwand 7 der Schutzhaube 4, wie in FIG 3 gezeigt, an einem Ende mit der Innenwand 6 der Schutzhaube 4 verbunden ist und mit dem anderen Ende eine Lufteintrittsöffnung 15 bildet. Wie FIG 2 zu entnehmen ist, umschließt die Außenwand 7 der Schutzhaube 4 sowohl den Befestigungsabschnitt als auch die Innenwand 6 der Schutzhaube 4. Der Auslass 3 des Luftkanals schließt sich derart an die Lufteintrittsöffnung 15 der Außenwand 7 der Schutzhaube 4 an, dass ein aus dem Auslass 3 des Luftkanals austretender Luftstrom wiederum in die Lufteintrittsöffnung 15 einströmt, um dann lediglich durch die Luftaustrittslöcher 8 der Innenwand 6 ausströmen zu können. Dabei sind die Luftaustrittslöcher 8 der Innenwand 6 so angeordnet, dass der aus den Luftaustrittslöchern 8 der Innenwand 6 herausströmende Luftstrom einen Luftvorhang vor dem Objektiv 5 erzeugt.

In diesem Ausführungsbeispiel der Dunstabzugshaube erzeugt die Luftstromerzeugungsvorrichtung der Objektivbaugruppe beim Betrieb einen Luftstrom, der nach Herausströmen aus dem Auslass 3 des Luftkanals über die Lufteintrittsöffnung 15 in den Luftstromkanal 13 eintritt und anschließend durch die Luftaustrittslöcher 8 der Innenwand 6 ausströmt, wobei die Strömungsrichtung des Luftstroms im Wesentlichen durch die Pfeile in FIG 1 dargestellt ist. Es ist anzumerken, dass FIG 1 lediglich eine schematische Darstellung der Funktionsweise zeigt, in der die Schutzhaube 4 in geschnittener Ansicht dargestellt ist.

Es sind mehrere Luftaustrittslöcher 8 vorgesehen, die in Umfangsrichtung der Innenwand 6 hintereinander angeordnet sind, d.h. alle Luftaustrittslöcher 8 sind insgesamt um das Objektiv 5 herum angeordnet. Aus FIG 2 ist zu ersehen, dass alle Luftaustrittslöcher 8 von oben nach unten in fünf umlaufenden Ringen angeordnet sind, um einen gleichmäßig verteilten Luftvorhang erzeugen zu können. Dabei sind die einzelnen Luftaustrittslöcher 8 jeweils als Rundloch ausgebildet.

Darüber hinaus ist die Schutzhaube 4 an einer Bodenwand 12 der Dunstauffanghaube 10 und der Einlass des Luftkanals an einer Oberwand 11 der Dunstauffanghaube 10 angeordnet. Das Objektiv 5 befindet sich an der Bodenwand 12 der Dunstauffanghaube 10 und ist nach unten ausgerichtet, um Bilder eines auf einem unterhalb der Dunstabzugshaube angeordneten Kochgerät stattfindenden Kochvorgangs aufzunehmen und somit ein Kochvideo zu erstellen. Ferner eignet sich das Objektiv 5 zur Aufnahme eines Bildes des beim Betrieb des unterhalb der Dunstabzugshaube befindlichen Kochgeräts entstehenden Dunsts, um die Dunstkonzentration zu ermitteln. Beim Betrieb der Luftstromerzeugungsvorrichtung der Objektivbaugruppe gemäß diesem Ausführungsbeispiel der Dunstabzugshaube bewegt sich der Luftstrom im Wesentlichen nach unten, wie dies im Wesentlichen durch die Pfeile in FIG 1 dargestellt ist.

Das oben Beschriebene stellt lediglich ein Ausführungsbeispiel der vorliegenden Anmeldung dar, wobei aus einigen Merkmalen durch Ergänzungen, Weglassungen, Abänderungen oder Substitutionen weitere Ausführungsbeispiele ableitbar sind. So müssen die Luftaustrittslöcher nicht unbedingt kreisförmig sein, sondern können auch z.B. dreieckig, oval, fünfzackig sternförmig oder quadratisch ausgebildet sein. Überdies können die einzelnen Luftaustrittslöcher auch anders als im vorliegenden Ausführungsbeispiel angeordnet sein, soweit dadurch die Aufgabe der vorliegenden Ausgestaltung gelöst werden kann. So können die einzelnen Luftaustrittslöcher beispielsweise in beliebiger Weise gleichmäßig verteilt an der Innenwand angeordnet sein. Es ist auch denkbar, die Kamera der Objektivbaugruppe durch eine Projektionsvorrichtung zu ersetzen, wobei das Objektiv entsprechend eine Projektionsfunktion besitzt. Des Weiteren lässt sich die Kamera der Objektivbaugruppe auch durch eine Bildaufnahme- und Projektionsvorrichtung ersetzen, wobei das Objektiv entsprechend sowohl eine Bildaufnahmefunktion als auch eine Projektionsfunktion hat. Als Gebläse kann auch ein Axialgebläse eingesetzt werden. Hinzu kommt, dass der Befestigungsabschnitt auch anders als im vorliegenden Ausführungsbeispiel aufgebaut sein kann, soweit dies sich zum Befestigen des Objektivs eignet. Zusätzlich hierzu ist die im vorangehenden Ausführungsbeispiel offenbarte Ausgestaltung der Objektivbaugruppe nicht auf die Verwendung in nach oben absaugenden Dunstabzugshauben beschränkt, sondern kann auch bei anderen Dunstabzugshaubentypen, wie etwa seitlich absaugenden Dunstabzugshauben oder sowohl seitlich als auch nach oben absaugenden Dunstabzugshauben, zum Einsatz kommen. Ferner kann die im vorangehenden Ausführungsbeispiel offenbarte Ausgestaltung der Objektivbaugruppe neben in Dunstabzugshauben auch in anderen Haushaltsgeräten, wie z.B. Backöfen, Dampfgarern, Kombi-Kochgeräten oder Kühlschränken, verwendet werden.

## Patentansprüche

1. Objektivbaugruppe eines Haushaltsgeräts, umfassend ein Objektiv (5), eine
Luftstromerzeugungsvorrichtung, einen Luftkanal und eine Schutzhaube (4), wobei die Schutzhaube (4) eine Innenwand (6) und eine Außenwand (7) umfasst, wobei zwischen der Innenwand (6) und der Außenwand (7) ein Luftstromkanal (13) ausgebildet ist und an der Innenwand (6) ein in den Luftstromkanal (13) mündendes Luftaustrittsloch (8) vorgesehen ist, wobei die Innenwand (6) ringförmig ausgebildet ist und das Objektiv (5) zumindest teilweise umschließt, wobei ein durch die Luftstromerzeugungsvorrichtung erzeugter Luftstrom nach Herausströmen aus dem Auslass (3) des Luftkanals in den Luftstromkanal (13) eintritt und anschließend durch das Luftaustrittsloch (8) der Innenwand (6) ausströmt, wobei
die Schutzhaube (4) ferner einen Befestigungsabschnitt umfasst, der zum Befestigen des Objektivs (5) eingerichtet ist, wobei die Innenwand (6) der Schutzhaube (4) an einem Ende mit der Außenwand (7) der Schutzhaube (4) und am anderen Ende mit dem Befestigungsabschnitt verbunden ist, während die Außenwand (7) der Schutzhaube (4) an einem Ende mit der Innenwand (6) der Schutzhaube (4) verbunden ist und mit dem anderen Ende eine Lufteintrittsöffnung (15) bildet, an die sich der Auslass (3) des Luftkanals anschließt.

2. Objektivbaugruppe nach Anspruch 1, **dadurch gekennzeichnet, dass** das Luftaustrittsloch (8) der Innenwand (6) so angeordnet ist, dass der aus dem Luftaustrittsloch (8) der Innenwand (6) herausströmende Luftstrom einen Luftvorhang vor dem Objektiv (5) erzeugt.

3. Objektivbaugruppe nach Anspruch 1 oder 2, **dadurch gekennzeichnet, dass** die Innenwand (6) die Form eines Hornmunds hat.

4. Objektivbaugruppe nach einem der vorhergehenden Ansprüche, **dadurch gekennzeichnet, dass** die Innenwand (6) die Form eines Kegelstumpfmantels hat.

5. Objektivbaugruppe nach einem der vorhergehenden Ansprüche, **dadurch gekennzeichnet, dass** mehrere Luftaustrittslöcher (8) vorgesehen sind, die in Umfangsrichtung der Innenwand (6) hintereinander angeordnet sind.

6. Objektivbaugruppe nach einem der vorhergehenden Ansprüche, **dadurch gekennzeichnet, dass** sie ferner ein Filtersieb (1) umfasst, das in dem Luftkanal angeordnet ist.

7. Objektivbaugruppe nach Anspruch 6, **dadurch gekennzeichnet, dass** die Luftstromerzeugungsvorrichtung ein Gebläse (2) umfasst, das sich in dem Luftkanal befindet und zwischen dem Filtersieb (1) und dem Auslass (3) des Luftkanals angeordnet ist.

8. Objektivbaugruppe nach einem der vorhergehenden Ansprüche, **dadurch gekennzeichnet, dass** es sich bei dem Objektiv um ein Bildaufnahmeobjektiv und/oder um ein Projektionsobjektiv handelt.

9. Haushaltsgerät, **dadurch gekennzeichnet, dass** es mit einer Objektivbaugruppe nach einem der Ansprüche 1 bis 8 versehen ist.

10. Haushaltsgerät nach Anspruch 9, **dadurch gekennzeichnet, dass** es sich bei dem Haushaltsgerät um eine Dunstabzugshaube handelt, die mit einer Dunstauffanghaube (10) versehen ist, wobei die Schutzhaube (4) und das Objektiv (5) an einer Bodenwand (12) der Dunstauffanghaube (10) angeordnet sind, während sich der Einlass des Luftkanals an einer Oberwand (11) der Dunstauffanghaube (10) befindet.

## Claims

1. Lens assembly of a household appliance, comprising a lens (5), an air flow generation apparatus, an air duct and a protective hood (4), wherein the protective hood (4) comprises an inner wall (6) and an outer wall (7), wherein an air flow duct (13) is embodied between the inner wall (6) and the outer wall (7) and an air outlet hole (8) which opens into the air flow duct (13) is provided on the inner wall (6), wherein the inner wall (6) is embodied to be ringshaped and encloses the lens (5) at least in part, wherein an air flow generated by the air flow generation apparatus enters the air flow duct (13) after flowing out of the outlet (3) of the air duct and then flows out through the air outlet hole (8) of the inner wall (6), wherein the protective hood (4) also comprises a fastening section, which is designed to fasten the lens (5), wherein the inner wall (6) of the protective hood (4) is connected to the outer wall of the protective hood (4) at one end and to the fastening section at the other end, while the outer wall (7) of the protective hood (4) is connected to the inner wall (6) of the protective hood (4) at one end and forms an air inlet opening (15) with the other end, to which air inlet opening (15) the outlet (3) of the air duct connects.

2. Lens assembly according to claim 1, **characterised in that** the air outlet hole (8) of the inner wall (6) is arranged such that the air flow flowing out of the air outlet hole (8) of the inner wall (6) generates an air curtain in front of the lens (5).

3. Lens assembly according to claim 1 or 2, **characterised in that** the inner wall (6) has the shape of a horn mouth.

4. Lens assembly according to one of the preceding claims, **characterised in that** the inner wall (6) has the shape of a truncated cone casing.

5. Lens assembly according to one of the preceding claims, **characterised in that** a number of air outlet holes (8) are provided, which are arranged one behind the other in the peripheral direction of the inner wall (6).

6. Lens assembly according to one of the preceding claims, **characterised in that** it further comprises a filter sieve (1) which is arranged in the air duct.

7. Lens assembly according to claim 6, **characterised in that** the air flow generation apparatus comprises a fan (2), which is located in the air duct and arranged between the filter sieve (1) and the outlet (3) of the air duct.

8. Lens assembly according to one of the preceding claims, **characterised in that** the lens is an image acquisition lens and/or a projection lens.

9. Household appliance, **characterised in that** it is provided with a lens assembly according to one of claims 1 to 8.

10. Household appliance according to claim 9, **characterised in that** the household appliance is an extractor hood, which is provided with a vapour collection hood (10), wherein the protective hood (4) and the lens (5) are arranged on a base wall (12) of the vapour collection hood (10), whereas the inlet of the air duct is located on an upper wall (11) of the vapour collection hood (10).

## Revendications

1. Ensemble d'objectif d'un appareil électroménager, comprenant un objectif (5), un dispositif de génération d'un flux d'air, un conduit d'air et un capot de protection (4),
dans lequel le capot de protection (4) comprend une paroi intérieure (6) et une paroi extérieure (7),
dans lequel un canal d'écoulement d'air (13) est formé entre la paroi intérieure (6) et la paroi extérieure (7) et un trou de sortie d'air (8) débouchant dans le canal d'écoulement d'air (13) est agencé sur la paroi intérieure (6),
dans lequel la paroi intérieure (6) est configurée sous une forme annulaire et entoure au moins en partie l'objectif (5),
dans lequel un flux d'air généré par le dispositif de génération d'un flux d'air entre, après l'écoulement hors de la sortie (3) du conduit d'air, dans le canal d'écoulement d'air (13) et s'écoule ensuite à travers le trou de sortie d'air (8) de la paroi intérieure (6),
dans lequel le capot de protection (4) comprend en outre une section de fixation, qui est configurée pour fixer l'objectif (5),
dans lequel la paroi intérieure (6) du capot de protection (4) est reliée au niveau d'une extrémité à la paroi extérieure (7) du capot de protection (4), et au niveau d'une autre extrémité à la section de fixation, tandis que la paroi extérieure (7) du capot de protection (4) est reliée au niveau d'une extrémité à la paroi intérieure (6) du capot de protection (4), et forme avec l'autre extrémité une ouverture d'entrée d'air (15), à laquelle la sortie (3) du conduit d'air se raccorde.

2. Ensemble d'objectif selon la revendication 1, **caractérisé en ce que** le trou de sortie d'air (8) de la paroi intérieure (6) est disposé de telle manière que le flux d'air s'écoulant hors du trou de sortie d'air (8) de la paroi intérieure (6) génère un rideau d'air devant l'objectif (5).

3. Ensemble d'objectif selon la revendication 1 ou 2, **caractérisé en ce que** la paroi intérieure (6) a la forme d'une embouchure de cornet.

4. Ensemble d'objectif selon l'une des revendications précédentes, **caractérisé en ce que** la paroi intérieure (6) a la forme d'une enveloppe tronconique.

5. Ensemble d'objectif selon l'une des revendications précédentes, **caractérisé en ce que** plusieurs trous de sortie d'air (8) sont agencés, qui sont disposés successivement dans la direction périphérique de la paroi intérieure (6).

6. Ensemble d'objectif selon l'une des revendications précédentes, **caractérisé en ce qu'**il comprend en outre un tamis filtrant (1), qui est disposé dans le conduit d'air.

7. Ensemble d'objectif selon la revendication 6, **caractérisé en ce que** le dispositif de génération d'un flux d'air comprend un ventilateur (2), qui se trouve dans le conduit d'air et est disposé entre le tamis filtrant (1) et la sortie (3) du conduit d'air.

8. Ensemble d'objectif selon l'une des revendications précédentes, **caractérisé en ce que** l'objectif est un objectif de capture d'images et/ou un objectif de projection.

9. Appareil électroménager, **caractérisé en ce qu'**il est équipé d'un ensemble d'objectif selon l'une des revendications 1 à 8.

10. Appareil électroménager selon la revendication 9, **caractérisé en ce que** l'appareil électroménager est une hotte d'extraction de fumées, qui est pourvue d'une hotte de captation de fumées (10), dans lequel le capot de protection (4) et l'objectif (5) sont disposés sur une paroi de fond (12) de la hotte de captation de fumées (10), tandis que l'entrée du conduit d'air se trouve au niveau d'une paroi supérieure (11) de la hotte de captation de fumées (10).
